# EUROPÄISCHE PATENTANMELDUNG

(11) **EP 1 201 471 A1**
(43) Veröffentlichungstag der Anmeldung: **02.05.2002**
(21) Anmeldenummer: 01123029.9
(22) Anmeldetag: 26.09.2001
(51) Int. Cl.: B60H 1/00

(54) **Lüftungsgerät, insbesondere für Fahrzeug- oder Maschinenkabinen**

(30) Priorität: 06.10.2000 DE 10050025
(71) Anmelder: Wölfle GmbH, 88416 Ochsenhausen (DE)
(72) Erfinder: Altvater, Harald, Dipl.-Ing., 88416 Ochsenhausen (DE)
(74) Vertreter: Patentanwälte Eisele, Otten, Roth & Dobler

(57) **Zusammenfassung**

Es wird ein Lüftungsgerät (1) mit Schwenkgebläse (5), insbesondere für Fahrzeug- oder Maschinenkabine vorgeschlagen, das den Belastungen durch Erschütterungen besser standhält. Dies wird erfindungsgemäß dadurch erreicht, dass eine nachgiebige, stoßentkoppelnde Verbindung (8, 10, 13) zwischen dem Schwenkantrieb (7) und dem Schwenkgebläse (5) vorgesehen wird.

## Beschreibung

Die Erfindung betrifft ein Lüftungsgerät nach dem Oberbegriff des Anspruchs 1.

Ein derartiges Lüftungsgerät ist beispielsweise mit der Druckschrift DE 88 03 054.7 bekannt geworden. Dieses Lüftungsgerät zeigt ein Gehäuse mit einer oberen und einer unteren Austrittsöffnung und ein Gebläse, das mechanisch oder mit Hilfe eines Stellmotors zwischen zwei Positionen geschwenkt werden kann. In einer Position wird die Druckseite des Gebläses mit der unteren Austrittsöffnung, in der anderen Position mit der oberen Austrittsöffnung verbunden. Hintergrund der Erfindung ist der Umstand, dass im Falle eines Heizbetriebs die Zuluft z.B. in eine Fahrzeugkabine eines Kraftfahrzeugs bevorzugt im Bodenraum, d.h. durch die untere Austrittsöffnung, im Falle eines Lüftungs- oder Kühlbetriebs möglichst im oberen Bereich der Kabine, d.h. durch die obere Austrittsöffnung zugeführt werden sollte, da aufgrund der Dichteunterschiede wärmere Luft von unten nach oben steigt und kältere Luft von oben nach unten fällt. Für den Heizbetrieb kann im Strömungsbereich vor der unteren Austrittsöffnung ein Heizelement, für den Kühlbetrieb im Strömungsbereich vor der oberen Austrittsöffnung ein Kühlelement vorgesehen werden. Bei Frischluftzufuhr wird über eine Frischluftöffnung Frischluft vom Gebläse angesaugt. Über einen Klappenmechanismus kann die Frischluftöffnung geschlossen und ein Umluftbetrieb hergestellt werden, wobei je nach Stellung des Gebläses über die obere oder untere Austrittsöffnung Kabinenluft angesaugt wird.

Bei der Verwendung solcher Kabinen in Kraftfahrzeugen, vor allem aber in Maschinen wie Baumaschinen, landwirtschaftlichen Maschinen usw. ist die Fahrerkabine häufig erheblichen Stoßbelastungen ausgesetzt. Dies sorgt gleichfalls für Erschütterungen des Lüftungsgerätes, die durch die schwenkbare Ausführung des Gebläses für eine starke Belastung des Stellantriebs sorgen. Gebläseschwingungen treten bei Erschütterungen verstärkt dann auf, wenn die Schwenkachse außerhalb des Gebläseschwerpunkts liegt.

Aufgabe der Erfindung ist es, ein Lüftungsgerät der einleitend genannten Art vorzuschlagen, das den Belastungen durch Erschütterungen besser standhält und dadurch die Konstruktion hinsichtlich der Anordnung der Schwenkachse des Gebläses erleichtert.

Diese Aufgabe wird ausgehend von einem Lüftungsgerät der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend wird erfindungsgemäß eine nachgiebige, stoßentkoppelnde Verbindung zwischen dem Schwenkantrieb und dem Gebläse vorgesehen. Hierdurch wird in gewissem Ausmaß eine Relativbewegung zwischen dem Antrieb, z.B. einem Stellmotor, und dem Gebläse möglich, wodurch insbesondere der Antrieb durch Schwingungen des schwenkbaren Gebläses keinen zusätzlichen Erschütterungen ausgesetzt wird. Durch die nachgiebige, stoßabsorbierende Verbindung zwischen dem Gebläse und dem Schwenkantrieb können zudem bei Bedarf bei dem Gebläse und/oder dem Schwenkantrieb stoßdämpfende Maßnahmen getroffen werden, die ebenfalls die Möglichkeit einer Relativbewegung zwischen Gebläse und Schwenkantrieb erfordern.

In einer besonderen Ausführungsform der Erfindung wird zudem ein Zwischengetriebe vorgesehen, um eine Kraftübersetzung zwischen dem Antrieb und der Drehachse des Schwenkgebläses vorzusehen, wodurch der Antrieb selbst schwächer dimensioniert werden kann. Insbesondere können handelsübliche Stellmotoren in Verbindung mit einer Kraftübersetzung problemlos eingesetzt werden.

In einer besonders vorteilhaften Ausführungsform wird die stoßentkoppelnde, nachgiebige Verbindung durch das Zwischengetriebe bewerkstelligt, so dass dieses eine Doppelfunktion wahrnehmen kann, wodurch der Fertigungsaufwand vermindert wird.

Eine nachgiebige stoßentkoppelnde Verbindung gemäß der Erfindung kann beispielsweise mit Hilfe eines Riemengetriebes realisiert werden. Die Nachgiebigkeit kann hierbei auf unterschiedliche Weise verwirklicht werden. In einer bestimmten Ausführungsform ist beispielsweise die Verwendung eines elastischen Riemens denkbar, so dass durch Längenänderungen des Riemens die Stoßentkopplung bewirkt werden kann.

In einer bevorzugten Ausführungsform der Erfindung wird jedoch ein nicht elastischer Riemen vorgesehen, der eine definierte Kraftübertragung ermöglicht. Bei Verwendung eines Riemens, der keine variable Länge aufweist, wird vorzugsweise zusätzlich eine Spannvorrichtung vorgesehen. In diesem Fall wird der Riemen in einer Länge ausgeführt, die größer ist, als es der Abstand des Antriebs von der Drehachse des Schwenkgebläses erfordert, wobei der Riemen durch die Spannvorrichtung straff an entsprechenden Rollen, Zahnrädern oder Ritzeln anliegt. Die Nachgiebigkeit des Getriebes wird in diesem Fall durch die Spannvorrichtung bewerkstelligt, die einen entsprechenden Längenausgleich bei einer Relativbewegung zwischen Gebläse und Antrieb vornehmen kann.

Im Falle eines Riemenantriebs wird bevorzugt ein Zahnriemen verwendet, um in Wechselwirkung mit entsprechenden Zahnrädern oder Ritzeln eine schlupffreie Kraftübertragung zu gewährleisten. Je nach Anwendungsfall wäre jedoch auch der Einsatz von anderen Riemenarten, beispielsweise von Keilriemen denkbar.

Weiterhin kann ein Zwischengetriebe mit erfindungsgemäßer stoßentkoppelnder Wirkung auch als Kettenantrieb verwirklicht werden.

Da eine Kette in der Regel nicht längenvariabel ist, wird auch hier vorzugsweise eine Spannvorrichtung in entsprechender Ausführung des Zwischengetriebes vorgesehen, wie anhand des Ausführungsbeispiels mit nicht elastischem Riemen oben ausgeführt wurde.

Als Antriebsvorrichtung kommt vorzugsweise ein elektrischer Stellmotor in Betracht. Derartige handelsübliche Stellmotoren können jedoch bei erfindungsgemäßen Lüftungsgeräten ohne weiteres eingesetzt werden, da erfindungsgemäß die Gebläseerschütterungen nicht auf den Antrieb übertragen werden.

Je nach Verwendungsart können jedoch auch hydraulische oder pneumatische Antriebssysteme vorgesehen werden. Insbesondere bei Baumaschinen oder landwirtschaftlichen Maschinen sind häufig die entsprechenden Anschlüsse ohnehin vorhanden. In diesem Fall kämen neben Hydraulik- oder Pneumatikmotoren auch Stellzylinder für die Umstellung der Gebläseposition in Betracht.

Weiterhin ist es von Vorteil, auch für die entsprechenden Lüftungsklappen, beispielsweise zur Umstellung von Umluftauf Frischluftbetrieb und umgekehrt oder aber auch zum Verschließen der oberen bzw. unteren Austrittsöffnung bei der Umstellung des Schwenkgebläses im Frischluftbetrieb ebenfalls mit einem Antrieb zu versehen, der vorzugsweise dem Antrieb für die Schwenkbewegung des Gebläses entsprechend ausgebildet ist. Hierdurch lässt sich die Ansteuerung für den Klappenantrieb leichter in die Steuerung für die Gebläsestellung integrieren.

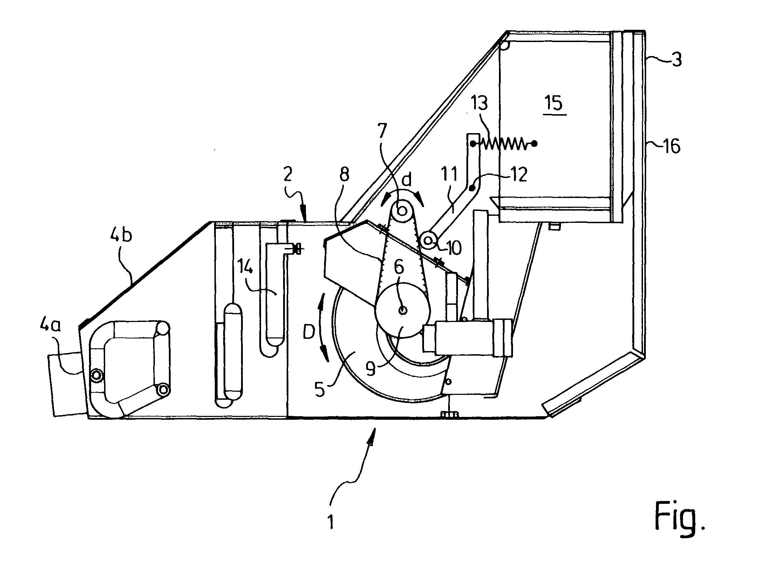

Ein Ausführungsbeispiel der Erfindung ist in der Zeichnung dargestellt und wird anhand der Figuren nachfolgend näher erläutert. Im Einzelnen zeigt die einzige Figur eine schematische Seitenansicht eines erfindungsgemäßen Lüftungsgeräts.

Im Einzelnen ist das Lüftungsgerät 1 mit seinem Gehäuse 2 dargestellt, in dessen Innern sich die Luftkanäle zu einer in der Seitenansicht der Figur nicht nähere erkennbaren stirnseitigen oberen Austrittsöffnung 3 und unteren Austrittsöffnungen 4 a/b befinden. Eine Öffnung 4b der beiden Öffnungen kann mit dem Fußraum der Kabine, die andere Öffnung 4a mit einem Lüftungskanal zu weiteren Anwendungen, z.B. für die Belüftung einer Kabinenscheibe, verbunden werden. Ein Gebläse 5 ist um eine Drehachse 6 schwenkbar im Gehäuse 2 gelagert, die in der Regel außerhalb des Schwerpunktes des Gebläses liegt, wodurch das Gebläse aufgrund der unwuchtigen Lagerung bei Gehäuseerschütterungen Stoßbewegungen oder Schwingungen ausführt. Ein Antriebsritzel 7 eines nicht näher dargestellten Antriebsmotors ist über einen Zahnriemen 8 mit einem Ritzel 9 verbunden, das drehfest an der Drehachse 6 des Gebläses 5 befestigt ist.

Durch die Drehung des Antriebsritzels 7 (durch Doppelpfeil d dargestellt) lässt sich somit das Gebläse 5 entsprechend dem Doppelpfeil D verschwenken.

Eine Spannrolle 10 ist an einem Spannhebel 11 befestigt, der an einem Zapfen 12 drehbar aufgehängt ist. An dem Spannrolle 10 gegenüberliegenden Ende des Spannhebels 11 ist eine Zugfeder 13 befestigt, die ihrerseits am Gehäuse 3 befestigt ist. Durch die Zugfeder 13 wird die Spannrolle 10 über den Hebel 11 auf den Zahnriemen 8 gedrückt, so dass der Zahnriemen 8 stets gespannt ist. Zugleich ist durch diese Anordnung eine Relativbewegung zwischen den beiden Ritzeln 7, 9 bzw. dem zugehörigen Antriebsmotor und dem Gebläse 5 möglich. Hierdurch wird die Übertragung von Stoßbewegungen oder Schwingungen von dem Schwenkgebläse auf den Antrieb unterbunden. Die mechanische Belastung für den Antrieb wird dadurch erheblich reduziert.

Mit dem Lüftungsgerät 2 kann wahlweise je nach Stellung des Gebläses 5 die Zuluft in die Personenkabine entweder über die untere Austrittsöffnung 4 oder aber über die obere Austrittsöffnung 3 strömen. Die Frischluft kann hierbei über eine nicht näher dargestellte Frischluftöffnung 16 auf der Stirnseite des Lüftungsgerätes angesaugt werden.

Über ein nicht näher dargestelltes Klappensystem kann diese Frischluftöffnung 16 verschlossen werden, so dass im Umluftbetrieb jeweils eine der Austrittsöffnungen 3, 4 a/b zugleich als Eintrittsöffnung für die Ansaugseite des Gebläses 5 dienen kann.

Das Gebläse 5 wird im Heizbetrieb so eingestellt, dass die Druckseite des Gebläses mit den unteren Austrittsöffnungen 4 a/b verbunden ist. Die Zuluft für die Personenkabine wird hierbei über Heizelemente 14 erwärmt. Vorliegend sind diese Heizelemente 14 als Rohranschlüsse zum Anschluss an ein separates Heizungssystem ausgebildet.

Im Kühlbetrieb wird das Gebläse 5 dergestalt verschwenkt, dass die Druckseite mit der oberen Austrittsöffnung 3 in Verbindung steht. Hierbei wird die Zuluft über einen schematisch angedeuteten Verdampfer 15 geleitet und gekühlt. An die obere Austrittsöffnung 3 werden hierzu bei Bedarf Lüftungskanäle angeschlossen, die im Deckenbereich der Kabine ausmünden.

Wie bereits einleitend erwähnt, ist es sinnvoll, die gekühlte Luft im oberen Bereich der Personenkabine zuzuführen, da aufgrund der Dichtunterschiede die kühlere Luft nach unten absinkt und somit eine gleichmäßigere Raumtemperatur erreicht wird. Im umgekehrten Falle, d.h. im Heizbetrieb, neigt die erwärmte Luft aufgrund der geringeren Dichte zum Aufstieg, so dass sich ein Einblasen im Bodenbereich anbietet, um wiederum eine gleichmäßigere Raumtemperatur zu erzielen.

### Bezugszeichenliste:

- 1: Lüftungsgerät
- 2: Gehäuse
- 3: obere Austrittsöffnung
- 4: untere Austrittsöffnung
- 5: Gebläse
- 6: Drehachse
- 7: Antriebsritzel
- 8: Zahnriemen
- 9: Ritzel
- 10: Spannrolle
- 11: Spannhebel
- 12: Zapfen
- 13: Zugfeder
- 14: Heizelemente
- 15: Verdampfer
- 16: Frischluftöffnung

## Patentansprüche

1. Lüftungsgerät, insbesondere für Fahrzeug- oder Maschinenkabinen mit einem Gehäuse, das Öffnungen zum Eintritt von Umluft und/oder von Frischluft und zu deren Austritt aufweist, wobei ein mittels eines Antriebs schwenkbares Gebläse vorhanden ist, dessen Druckseite von einer oberen Gehäuseöffnung zu einer unteren Gehäuseöffnung und umgekehrt umstellbar ist, **dadurch gekennzeichnet, dass** eine nachgiebige, stoßentkoppelnde Verbindung (8, 10, 11, 13) zwischen Antrieb und Gebläse (3) vorgesehen ist.

2. Lüftungsgerät nach Anspruch 1, **dadurch gekennzeichnet, dass** ein Zwischengetriebe (7, 8, 9) vorgesehen ist.

3. Lüftungsgerät nach einem der vorgenannten Ansprüche, **dadurch gekennzeichnet, dass** das Zwischengetriebe (7, 8, 9, 10, 11, 13) die nachgiebige Verbindung umfasst.

4. Lüftungsgerät nach einem der vorgenannten Ansprüche, **dadurch gekennzeichnet, dass** ein Riemenantrieb vorgesehen ist.

5. Lüftungsgerät nach einem der vorgenannten Ansprüche, **dadurch gekennzeichnet, dass** der Riemenantrieb einen elastischen Riemen umfasst.

6. Lüftungsgerät nach einem der vorgenannten Ansprüche, **dadurch gekennzeichnet, dass** der Riemenantrieb einen Zahnriemen (8) umfasst.

7. Lüftungsgerät nach einem der vorgenannten Ansprüche, **dadurch gekennzeichnet, dass** ein Kettenantrieb vorgesehen ist.

8. Lüftungsgerät nach einem der vorgenannten Ansprüche, **dadurch gekennzeichnet, dass** eine Spannvorrichtung (10, 11, 12, 13) für den Ketten- oder Riemenantrieb vorgesehen ist.

9. Lüftungsgerät nach einem der vorgenannten Ansprüche, **dadurch gekennzeichnet, dass** der Antrieb einen Elektromotor umfasst.

10. Lüftungsgerät nach einem der vorgenannten Ansprüche, **dadurch gekennzeichnet, dass** ein Hydraulik- und/oder Pneumatikantrieb für die Schwenkbewegung des Gebläses vorgesehen ist.

11. Fahrzeug- oder Maschinenkabine mit einem Lüftungsgerät, **dadurch gekennzeichnet, dass** das Lüftungsgerät nach einem der vorgenannten Ansprüche ausgebildet ist.

12. Fahrzeug nach einem der vorgenannten Ansprüche, **dadurch gekennzeichnet, dass** eine Kabine nach Anspruch 11 vorgesehen ist.

13. Maschine, insbesondere Baumaschine oder landwirtschaftliche Maschine, **dadurch gekennzeichnet, dass** eine Kabine nach Anspruch 11 vorgesehen ist.
